Europäisches Patentamt

(19) European Patent Office

Office européen des brevets

(11) Numéro de publication: **0 200 072**
**B1**

(12) FASCICULE DE BREVET EUROPEEN

(45) Date de publication du fascicule du brevet:
**04.07.90**

(51) Int. Cl.⁵: **G01M 11/06**

(21) Numéro de dépôt: **86105096.1**

(22) Date de dépôt: **14.04.86**

(54) **Procédé et dispositif permettant de faciliter le réglage angulaire latéral d'un projecteur lumineux de véhicule.**

(30) Priorité: **15.04.85 FR 8505639**

(43) Date de publication de la demande:
**10.12.86 Bulletin 86/45**

(45) Mention de la délivrance du brevet:
**04.07.90 Bulletin 90/27**

(84) Etats contractants désignés:
**DE FR GB IT SE**

(56) Documents cités:
**EP-A- 0 043 810**
**FR-A- 2 217 944**
**US-A- 3 077 139**
**US-A- 3 386 333**
**US-A- 3 467 473**
**US-A- 3 532 432**
**US-A- 3 746 449**
**US-A- 3 791 740**
**US-A- 3 822 944**

(73) Titulaire: **SOCIETE D'AUTOMATISME ET DE REGLAGE OPTIQUE Société à responsabilité limitée, 12, Rue du Petit Lac, F-38950 Saint Martin le Vinoux(FR)**

(72) Inventeur: **Sdika, Claude, 12, rue du Petit Lac, F-38950 Saint-Martin-le-Vinoux(FR)**

(74) Mandataire: **Casalonga, Axel et al, BUREAU D.A. CASALONGA - JOSSE Morassistrasse 8, D-8000 München 5(DE)**

ACTORUM AG

## Description

La présente invention concerne un procédé et un dispositif qui permettent de faciliter le réglage angulaire dans le sens horizontal du faisceau lumineux d'un projecteur de véhicule, dans sa position d'éclairage en code.

On sait actuellement régler les projecteurs des véhicules de deux manières différentes, l'une étant mécanique et l'autre visuelle. Dans le mode de réglage mécanique, tel que celui du brevet US-A 3 822 944, on place sur la glace du projecteur un gabarit et on règle angulairement le projecteur de manière que ce gabarit soit dans une orientation déterminée. Ce type de réglage ne tient cependant pas compte du faisceau lumineux émis par le projecteur. Dans le mode de réglage visuel, l'opérateur dispose perpendiculairement au faisceau lumineux d'un écran sur lequel sont tracées des lignes servant de repère et l'opérateur règle angulairement le projecteur de telle sorte que certaines zones du faisceau lumineux émis soient sur ces lignes. Cette manière de faire ne donne cependant pas satisfaction car les zones de changement d'intensité du faisceau lumineux ne sont pas faciles à distinguer et, au bout de quelques réglages, l'œil de l'opérateur devient déficient.

Différentes solutions ont été proposées pour résoudre ces difficultés. Le brevet US-A 3 791 740 montre un dispositif de réglage du faisceau lumineux dans lequel pour pouvoir effectuer le réglage latéral la cellule photoélectrique doit être en majeure partie dans la zone d'ombre. Si le projecteur est déréglé dans le sens vertical et si en particulier la ligne de coupure horizontale 7 se situe en dessous des cellules ou nettement au dessus, le réglage latéral est impossible. Le brevet US-A 3 746 449 montre un dispositif de réglage du faisceau lumineux dans lequel, pour pouvoir effectuer le réglage latéral, les cellules photoélectriques doivent être sur l'horizontale de la zone intense du faisceau lumineux. Si le projecteur est déréglé dans le sens vertical et si en particulier la ligne de coupure horizontale se situe au dessous des cellules ou nettement au dessus, le réglage latéral est impossible.

La présente invention a pour but d'éviter les inconvénients des techniques actuellement utilisées et permet de régler correctement et sans difficultés particulières les projecteurs lumineux, dans le sens latéral, même si le projecteur n'est pas réglé convenablement dans le sens vertical.

Tel qu'il est revendiqué, le procédé de l'invention permet de faciliter le réglage angulaire dans le sens latéral du faisceau lumineux d'un projecteur de véhicule, dans sa position d'éclairage en code dans laquelle le faisceau lumineux s'étend d'un côté d'une ligne de coupure, à l'aide du signal électrique fourni par au moins une cellule photoélectrique placée dans le faisceau lumineux, et dans lequel on règle latéralement la position du projecteur pour que le signal électrique fourni par ladite cellule soit à une valeur déterminée. Le procédé de l'invention consiste à placer sensiblement verticalement dans le faisceau lumineux du projecteur ladite au moins une cellule photoélectrique allongée ou une série de cellules photoélectriques disposées de manière adjacente les unes au-dessus des autres de telle sorte que la partie supérieure de sa face sensible s'étende dans la zone non éclairée par le projecteur et sa partie inférieure dans la zone éclairante du faisceau lumineux du projecteur quelle que soit la position de réglage dans le sens vertical du projecteur, la longueur de la cellule photoélectrique allongée ou série de cellules photoélectriques étant au moins égale au produit de l'amplitude du déplacement angulaire maximum du projecteur dans le sens vertical par la distance projecteur-cellule, et de telle sorte que, lorsque le projecteur lumineux est à sa position de réglage latéral correct, le signal électrique fourni par ladite cellule photoélectrique et dû à l'éclairage de sa partie inférieure soit à une valeur déterminée, de préférence à sa valeur maximum.

Bien que l'utilisation d'une cellule photoélectrique puisse être suffisante pour effectuer le réglage angulaire latéral du projecteur, le procédé de l'invention, tel qu'il est revendiqué, consiste, de préférence, à placer sensiblement verticalement dans le faisceau lumineux du projecteur au moins deux cellules photoélectriques allongées ou deux séries de cellules photoélectriques disposées de manière adjacente les unes au-dessus des autres de telle sorte que la partie supérieure de leur face sensible s'étende dans la zone non éclairée par le projecteur et leur partie inférieure dans la zone éclairante du faisceau lumineux du projecteur quelle que soit la position de réglage dans le sens vertical du projecteur, la longueur de chaque cellule photoélectrique allongée ou série de cellules photoélectriques étant au moins égale au produit de l'amplitude du déplacement angulaire maximum du projecteur dans le sens vertical par la distance projecteur-cellule, à comparer les signaux électriques fournis par lesdites cellules photoélectriques et dus à l'éclairage de leur partie inférieure.

Tel qu'il est revendiqué, le dispositif de l'invention permet de faciliter le réglage angulaire dans le sens latéral du faisceau lumineux d'un projecteur de véhicule, dans sa position d'éclairage en code dans laquelle le faisceau lumineux s'étend d'un côté d'une ligne de coupure, à l'aide du signal électrique fourni par au moins une cellule photoélectrique placée dans le faisceau lumineux d'un ensemble comprenant une lentille disposée devant le projecteur lumineux et adaptée pour focaliser le faisceau lumineux fourni par ce dernier, des moyens pour comparer les signaux électriques fournis par ladite au moins une cellule photoélectrique et pour fournir des informations relatives à la position latérale du projecteur par rapport à sa position de réglage latéral correct et des moyens de signalisation soumis aux informations fournies par lesdits moyens de comparaison permettant d'indiquer la position latérale du projecteur par rapport à sa position de réglage latéral correct. Le dispositif de l'invention comprend au moins deux cellules photoélectriques allongées ou deux séries de cellules photoélectriques disposées de manière adjacente les unes au-dessus des autres dont les faces sensibles sont sensiblement dans le plan focal de ladite lentille et tournées vers cette dernière, lesdites cellules photoélectriques étant disposées sensiblement verticalement de telle sorte que, quelle que soit la position de réglage dans le sens vertical du projecteur lumineux, la ligne de coupure du faisceau lumineux les coupe de manière que la partie supérieure de leur face sensible s'étende dans la zone non éclairée par le projecteur et leur partie inférieure s'étende dans la zone éclairante du faisceau lumineux du projecteur quelle que soit la position de réglage dans le sens vertical du projecteur, la longueur de chaque cellule photoélectrique allongée ou série de cellules photoélectriques étant au moins égale au produit de l'amplitude du déplacement angulaire maximum du projecteur dans le sens vertical par la valeur de la focale de ladite lentille, et que, dans la position de réglage latéral correct du projecteur lumineux, les signaux électriques qu'elles fournissent soient dans un rapport déterminé.

Selon la présente invention, les cellules photoélectriques sont de préférence disposées sensiblement verticalement dans des positions telles que dans la position de réglage latéral correct du projecteur, elles s'étendent de part et d'autre de la zone d'éclairage la plus intense du faisceau lumineux émis par le projecteur.

Selon la présente invention, lesdites cellules photoélectriques sont de préférence prévues et disposées de telle sorte que les signaux électriques qu'elles fournissent dans la position de réglage latéral correct du projecteur, sont égaux.

Selon la présente invention, lesdites cellules photoélectriques sont de préférence disposées sensiblement verticalement dans des positions telles que, dans la position de réglage latéral correct du projecteur, le sommet du V de coupure du faisceau lumineux émis par le projecteur soit sur l'une desdites cellules.

De manière à pouvoir permettre aussi bien le réglage de projecteurs de véhicule à conduite à gauche que le réglage de projecteurs de véhicule à conduite à droite, le dispositif selon la présente invention peut avantageusement comprendre une troisième cellule ou séries de cellules photoélectriques disposées symétriquement par rapport à ladite cellule photoélectrique sur laquelle se situe le sommet du V de coupure du faisceau lumineux du projecteur, cette troisième cellule étant reliée auxdits moyens de comparaison en vue de comparer les courants fournis par cette troisième cellule photoélectrique et ladite cellule photoélectrique centrale et de fournir auxdits moyens de signalisation des informations relatives à la position latérale du projecteur par rapport à sa position de réglage latéral correct.

Selon la présente invention, lesdits moyens de comparaison comprennent de préférence un différenciateur pour différencier les signaux électriques fournis par lesdites cellules photoélectriques et fournissant à sa sortie des informations de comparaison de ces signaux, et lesdits moyens de signalisation comprennent de préférence un interrupteur électronique qui est soumis aux informations de sortie du différenciateur et dont les trois sorties sont respectivement reliées à trois voyants lumineux, de telle sorte qu'à l'une des positions dudit interrupteur électronique est associée la position de réglage latéral correct du projecteur tandis qu'aux deux autres positions dudit interrupteur électronique sont associées les positions de réglage incorrect du projecteur, respectivement d'un côté ou de l'autre, par rapport à sa position de réglage latéral correct.

La présente invention sera mieux comprise à l'étude de dispositifs permettant de faciliter le réglage angulaire d'un projecteur lumineux de véhicule, dans le sens latéral, décrits à titre d'exemples non limitatifs et illustrés sur le dessin sur lequel :

- la figure 1 représente très schématiquement une vue du dispositif dans le faisceau lumineux d'un projecteur ;
- la figure 2 représente très schématiquement, en vue transversale, un premier mode de réglage d'un projecteur ;
- la figure 3 représente très schématiquement, en vue transversale, une second mode de réglage d'un projecteur ;
- la figure 4 représente une vue selon la flèche F de la figure 1 d'un premier dispositif selon la présente invention ;
- la figure 5 représente le circuit électronique associé au dispositif représenté sur la figure 4 ;
- la figure 6 représente, dans une vue selon F de la figure 1, un second dispositif selon la présente invention ;
- et la figure 7 représente en circuit électronique associé au dispositif représenté sur la figure 6.

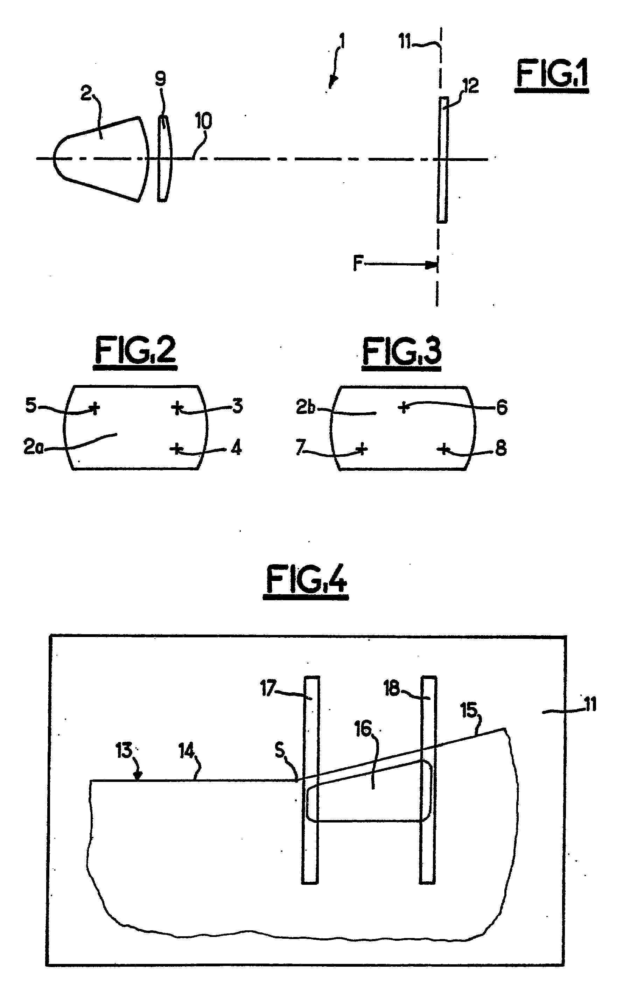

En se reportant à la figure 1, on voit que le dispositif décrit ci-après, repéré d'une manière générale par la référence 1, est destiné à faciliter le réglage de la position angulaire d'un projecteur lumineux 2 de véhicule.

Dans la technique actuelle, les projecteurs sont munis de moyens de réglage angulaire qui sont bien connus et qui permettent d'ajuster aussi bien leur orientation dans un sens vertical que leur orientation dans le sens horizontal. La figure 2 montre un projecteur lumineux 2a qui présente un point fixe 3 ainsi que deux points de réglage 4 et 5 qui forment un triangle rectangle dont le côté 3, 4 est sensiblement vertical et dont le côté 3, 5 est sensiblement horizontal de telle sorte que le projecteur 2a peut pivoter autour de la ligne verticale 3, 4 par une action sur le point 5, pour effectuer le réglage dans le sens latéral et que le projecteur 2a peut pivoter autour de l'axe sensiblement horizontal 3, 5 par une action sur le point 4, en vue de son réglage dans le sens vertical. Grâce à cette construction, le réglage dans le sens latéral et le réglage dans le sens vertical du projecteur 2a sont indépendants. La figure 3 montre, au contraire, un projecteur 2b qui présente un point fixe 7 ainsi que deux points de réglage 6 et 8, les points de réglage 7 et 8 étant sur une ligne sensiblement horizontale tandis que le point fixe 7 n'est pas à la vericale du point de réglage 6. Une action sur le point de réglage 6 modifie uniquement le réglage vertical alors qu'une action sur le point de réglage 8 modifie l'orientation du projecteur 26 aussi bien dans le sens vertical que dans le sens latéral. Celà signifie que dans ce dernier cas, on ne peut pas régler le projecteur uniquement dans le sens latéral.

En se reportant de nouveau à la figure 1, on voit que le dispositif 1 comprend une lentille 9 qui est disposée juste devant le projecteur 2 de telle sorte que son axe 10 s'étende horizontalement et passe approximativement par le centre du projecteur lumineux 2. Cetter lentille 9 est destinée à focaliser la lumière émise par le projecteur lumineux 2 sur un plan 11 perpendiculaire à l'axe 4 et situé sensiblement à la distance focale de la lentille 9.

Le dispositif 1 comprend également un écran 12 qui s'étend sensiblement dans le plan vertical 11 et qui porte des cellules photoélectriques dont les faces sensible sont orientées vers la lentille 9 et s'étendent dans le plan vertical 11. La disposition de ces cellules photoélectriques dans le plan 11 sera décrite plus loin.

En se reportant à la figure 4, on voit que le projecteur lumineux 2 est apte à émettre, en position d'éclairage en code, un faisceau lumineux qui détermine dans le plan 11 un V de coupure 13 au-dessous duquel le faisceau lumineux apparaît, ce V de coupure 13 présentant sur la partie gauche du dessin une ligne de coupure horizontale 14 et sur la partie droite du dessin une ligne de coupure inclinée 15 vers son sommet S. Dans sa partie éclairante située endessous du V de coupure 13, le faisceau lumineux présente une zone d'éclairage plus intense 16. Cette zone d'éclairage plus intense 16 est sensiblement ovale et s'étend juste en-dessous de la ligne de coupure inclinée 15 et juste à droite du sommet S.

Il convient de noter qui le sommet S est habituellement, lorsque le projecteur lumineux 2 est convenablement réglé dans son sens latéral, sensiblement dans le plan vertical passant par l'axe 10.

Comme on le voit sur la figure 4, le dispositif 1 comprend deux cellules photoélectriques allongées 17 et 18 dont les faces sensibles sont dans le plan 11 et qui sont, dans l'exemple, de même longueur et qui sont disposées verticalement et à la même hauteur. Ces cellules photoélectriques 17 et 18 sont disposées de manière à être coupées par la ligne de coupure 13 du faisceau lumineux émis par le projecteur 2 de telle sorte qu'elles soient, dans leur partie inférieure, éclairées et, dans leur partie supérieure, non éclairées, quelle que soit l'orientation angulaire du projecteur lumineux 2 dans son sens vertical, dans les limites de son débattement angulairement vertical possible. En outre, dans cet exemple, les cellules photoélectriques 17 et 18 sont disposées de manière que, dans la position de réglage latéral correct du projecteur 2, elles s'étendent de part et d'autre de la zone d'éclairage intense 16 due faisceau lumineux du projecteur 2, les bords gauche et droite de cette zone les recouvrant cependant légèrement. On remarque que c'est la ligne de coupure inclindée 15 qui coupe les cellules 17 et 18. Dans cette réalisation, les cellules photoélectriques 17 et 18 sont, de plus, prévues et disposées de telle sorte que, dans la position de réglage latéral correct du projecteur lumineux 2, elles fournissent des courants électriques, dûs aux quantités de lumière auxquelles elles sont soumises, égaux, dont les rapports sont indépendants du réglage angulaire dans le sens vertical du projecteur lumineux 2.

Dans la pratique, il peut paraître avantageux de construire les cellules photoélectriques 17 et 18 à l'aide de deux séries de cellules photoélectriques disposées de manière adjacentes les unes au-dessus des autres.

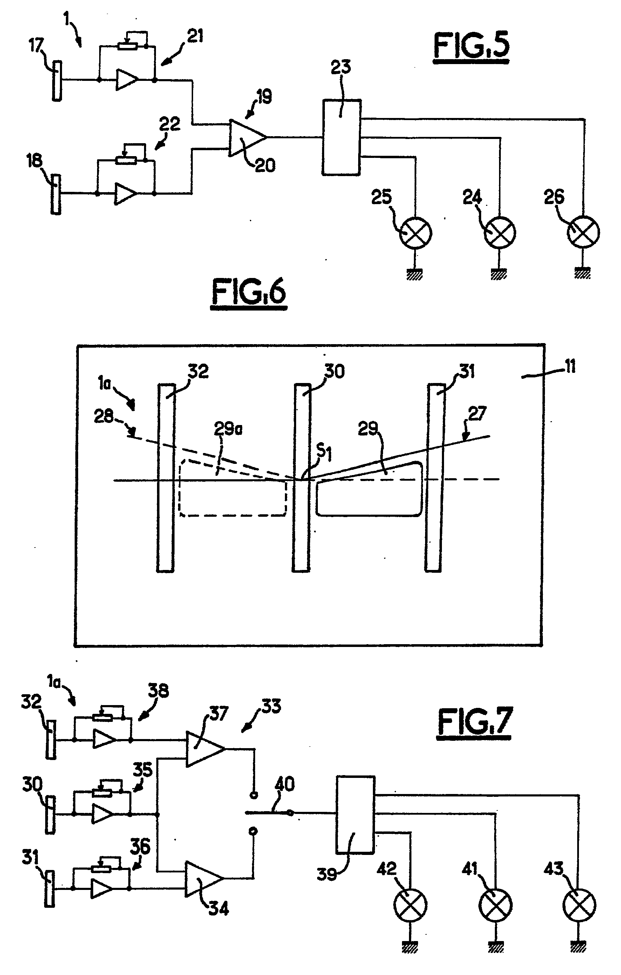

En se reportant à la figure 5, on voit que le dispositif 1 comprend également un circuit électronique repéré d'une manière générale par la référence 19, qui comprennent des moyens de comparaison qui sont reliés auxdites cellules photoélectriques et des moyens de signalisation qui sont soumis à ces moyens de comparaison.

Les cellules photoélectriques 17 et 18 sont reliées aux deux entrées d'un différenciateur 20 via des circuits d'amplification 21 et 22. La sortie du différenciateur 20 est reliée à l'entrée d'un interrupteur électronique 22 capable d'alimenter sélectivement trois voyants lumineux 24, 25 et 26.

Le circuit électronique 19 fonctionne et peut être utilisé de la manière suivante.

Lorsque le projecteur lumineux 2 est convenablement réglé dans son sens latéral, les courants fournis par les cellules 17 et 18, comme on l'a vu précédemment, sont égaux. Le différenciateur 20 fournit à l'interrupteur électronique 23 une information correspondante et ce dernier provoque l'allumage du voyant lumineux central 24 qui permet d'indiquer que le projecteur lumineux 2 est dans le sens latéral convenablement réglé. Si par contre, le projecteur lumineux 2 est décalé par rapport à sa position de réglage latéral correct, soit vers la gauche, soit vers la droite, les cellules 17 et 18 sont alors soumises à des quantités de lumière telles que les courants qu'elles fournissent ne sont plus égaux et sont en faveur soit de l'une soit de l'autre. Le différenciateur 20 fournit alors à l'interrupteur électronique 23 une information correspondante et ce dernier provoque en conséquence l'allumage soit du voyant lumineux 25 si le projecteur lumineux 2 est déréglé vers la gauche, soit le voyant lumineux 26 si le projecteur est déréglé vers la droite. En se basant sur les voyants lumineux 24, 25 et 26, l'opérateur qui règle le projecteur 2 peut agir sur les moyens mécaniques de réglage angulaire du projecteur 2 de manière à le disposer dans sa position de réglage latéral correct dans laquelle le voyant lumineux central 24 est allumé et les voyants lumineux 25 et 26 éteints.

Comme on l'a vu précédemment, la longueur des cellules 17 et 18 doit être suffisante de manière à pouvoir effectuer le réglage du projecteur 2 dans le sens latéral quelle que soit la position du projecteur 2 dans son sens vertical. Celà est spécialement intéressant dans la configuration de la figure 3 où une modification du réglage latéral entraîne une modification du réglage vertical. Dans un exemple, si l'amplitude angulaire de réglage maximum du projecteur 2 dans le sens vertical est de 1°30', la longueur minimale des cellules 17 et 18 doit être de deux fois la tangente de cet angle multiplié par la focale de la cellule 9. Si la focale de la cellule 9 est d'un mètre, la longueur minimum des cellules 17 et 18 doit être de cinquante millimètres. Dans la pratique, on prendra une longueur des cellules 17 et 18 un peu plus grande de manière qu'elles présentent, dans la position de réglage maximum vers le haut dans le sens vertical du projecteur 2 leur partie supérieure non éclairée et vers la position de réglage maximum vers le bas dans le sens vertical du projecteur 2, leur partie inférieure éclairée sur une longueur suffisante.

Le dispositif 1 qui vient d'être décrit présente une structure qui permet le réglage de projecteurs lumineux adaptés pour des véhicules à conduite à droite. En référence aux figures 6 et 7, on va maintenant décrire un dispositif repéré d'une manière générale par la référence 1a qui permet de faciliter le réglage latéral aussi bien de projecteurs lumineux adaptés pour les véhicules à conduite à droite que les projecteurs lumineux adaptés pour les véhicules à conduite à gauche.

Sur la figure 6, qui est une vue selon la flèche F selon la figure 1 du plan 11, on a représenté en traits forts le V de coupure 27 du faisceau lumineux d'un projecteur adapté pour un véhicule à conduite à droite, qui correspond au faisceau lumineux de l'exemple précédent visible sur la figure 4 et en traits pointillés le V de coupure 28 d'un faisceau lumineux d'un projecteur adapté pour un véhicule à conduite à gauche, ces V de coupure 27 et 28 étant sensiblement symétriques par rapport à la ligne verticale passant par leur sommet commun $S_1$.

Le faisceau lumineux présentant la ligne de coupure 27 présente, comme dans l'exemple précédent, une zone d'éclairage plus intense 29 tracée en traits forts tandis que le faisceau lumineux présentant la ligne de coupure 29 présente une zone d'éclairage plus intense 29a tracée en traits tirés et sensiblement symétriques à la zone 29 par rapport à la ligne verticale passant par le sommet $S_1$.

Le dispositif 1a présente une cellule photoélectrique allongée centrale 30 ainsi que deux cellules photoélectriques allongées latérales 31 et 32, dont les faces sensible sont dans le plan vertical 11 visibles sur la figure 1 et tournées vers la lentille 9. Ces cellules photoélectriques allongées 30, 31 et 32 sont disposées, dans le plan verical 11, verticalement et à la même hauteur de la manière suivante.

Lorsque les projecteurs lumineux associés aux lignes de coupure 27 et 28 sont correctement réglés dans le sens latéral, le sommet $S_1$ se siture sensiblement au milieu, dans le sens de la largeur, de la cellule centrale 30 qui s'étend sur le bord gauche de la zone d'éclairage la plus intense 29 et sur le bord droit de la zone d'éclairage la plus intense 29a, la cellule photoélectrique allongée 31 s'étend le long ou sur le bord droit de la zone d'éclairage plus intense 29 et la cellule photoélectrique allongée 32 s'étend le long ou sur le bord de la zone d'éclairage plus intense 29a Il s'ensuit que le couple formé par les cellules photoélectriques allongées 30 et 31 et le couple formé par les cellules photoélectriques allongées 30 et 32 correspondent tant du point de vue leur disposition que du point de vue de leur fonctionnement au couple formé par les cellules photoélectriques allongées 17 et 18 de l'exemple précédent, le couple formé par les cellules photoélectriques allongées 30 et 31 étant adapté pour le réglage latéral de projecteur dont le faisceau lumineux en position d'éclairage en code présente la ligne de coupure 27 tandis que le couple formé par les cellules photoélectriques allongées 30 et 31 est adapté pour effectuer le réglage latéral de projecteurs dont le faisceau lumineux, en position d'éclairage en code, présente la ligne de coupure 28.

Comme précédemment, les cellules des couples de cellules photoélectriques 30, 31 et 30, 32 sont prévues et disposées de manière à fournir respectivement des courants égaux lorsque respectivement les projecteurs lumineux déterminant les lignes de coupure 27 et 28 sont convenablement réglés dans le sens latéral.

Le dispositif 1a comprend également un circuit électronique repéré d'une manière générale par la référence 33 qui se rapproche du cirucit électronique 19 représenté sur la figure 5 et qui est construit de la manière suivante.

Les cellules photoélectriques 30 et 31 sont reliées aux deux entrées d'un comparateur 34 vis des amplificateurs 35 et 36. La cellule 30 est également reliée à l'une des entrées d'un comparateur 37 via l'amplificateur 35 tandis qui la cellule photoélectrique 32 est relié à l'autre entrée du comparateur 37 via un amplificateur 38. Les sorties des comparateurs 34 et 35 sont reliées d'un commutateur électronique 39 par l'intermédiaire d'un interrupteur manuel à deux positions 40, les trois sorties de l'interrupteur électronique 39 étant respectivement reliées à trois voyants lumineux 41, 42 et 43.

Lorsque l'opérateur souhaite effectuer le réglage du faisceau lumineux d'un projecteur formant dans le plan 11 la ligne de coupure 27 et la zone d'éclairage plus intense 29, qui correspond à un projecteur d'un véhicule à conduite à droite, il place l'interrupteur manuel 40 dans sa position dans laquelle la sortie du comparateur 34 est reliée à l'entrée de l'interrupteur électronique 39. Il peut alors utiliser le circuit électronique formé par les cellules photoélectriques 30 et 31, le comparateur 34, le commutateur électronique 39 et le voyant lumineux 41, 42 et 43 de la même manière que le circuit électronique 19 de l'exemple précédent représenté sur la figure 5 pour effectuer le réglage de ce projecteur lumineux car son fonctionnement est identique.

Si l'opérateur souhaite effectuer le réglage d'un projecteur lumineux déterminant dans le plan 11 la ligne de coupure 28 et la zone d'éclairage plus intense 29a qui correspond à un projecteur de véhicule à conduite à gauche, il place l'interrupteur manuel 40 dans sa position telle que la sortie du comparateur 37 est reliée à l'entrée du commutateur électronique 39. Comme précédemment, le circuit électronique formé des cellules photoélectriques 30 et 32, du différenciateur 37, du commutateur électronique 39 et des voyants lumineux 41, 42 et 43 est équivalent au circuit électronique 19 représenté sur la figure 5 de l'exemple précédent et fonctionne et peut être utilisé de la même manière pour effectuer le réglage latéral de ce projecteur lumineux.

Les dispositifs 1 et 1a ne sont pas limités au réglage latéral des projecteurs lumineux formant de lignes de coupure présentant une branche horizontale et une branche inclinée. Ils peuvent en effet être également utilisés pour le réglage dans le sens latéral de projecteur lumineux de véhicule formant des V de coupure présentant une branche verticale et une branche horizontale. En général, ces projecteurs lumineux présentent une zone d'éclairage plus intense de forme ovale et disposée dans l'angle du V, de part et d'autres desquels les couples de cellules photoélectriques allongées des dispositifs ci-dessus peuvent s'étendre.

La présente invention ne se limite pas aux exemples ci-dessus décrits. Bien des variantes de réalisation sont possibles sans sortir du cadre défini par les revendications annexées.

## Revendications

1. Procédé permettant de faciliter le réglage angulaire dans le sens latéral du faisceau lumineux d'un projecteur (2) de véhicule, dans sa position d'éclairage en code dans laquelle le faisceau lumineux s'étend d'un côté d'une ligne de coupure, à l'aide du signal électrique fourni par au moins une cellule photoélectrique placée dans le faisceau lumineux, et dans lequel on règle latéralement la position du projecteur pour que le signal électrique fourni par ladite cellule soit à une valeur déterminée, caractérisé par le fait qu'il consiste à placer sensiblement verticalement dans le faisceau lumineux du projecteur ladite au moins une cellule photoélectrique allongée (18) ou une série (18) de cellules photoélectriques disposées de manière adjacentes les unes au-dessus des autres de telle sorte que la partie supérieure de sa face sensible s'étende dans la zone non éclairée par le projecteur et sa partie inférieure dans la zone éclairante du faisceau lumineux du projecteur quelle que soit la position de réglage dans le sens vertical du projecteur, la longueur de la cellule photoélectrique allongée ou série de cellules photoélectriques étant au moins égale au produit de l'amplitude du déplacement angulaire maximum du projecteur dans le sens vertical par la distance projecteur-cellule, et de telle sorte que, lorsque le projecteur lumineux (2) est à sa position de réglage latéral correct, le signal électrique fourni par ladite cellule photoélectrique (18) et dû à l'éclairage de sa partie inférieure soit à une valeur déterminée, de préférence à sa valeur maximum.

2. Procédé permettant de faciliter le réglage angulaire dans le sens latéral du faisceau lumineux d'un projecteur (2) de véhicule, dans sa position d'éclairage en code dans laquelle le faisceau lumineux s'étend d'un côté d'une ligne de coupure, à l'aide du signal électrique fourni par au moins une cellule photoélectrique placée dans le faisceau lumineux, et dans lequel on règle latéralement la position du projecteur pour que le signal électrique fourni par ladite au moins une cellule soit à une valeur déterminée, caractérisé par le fait qu'il consiste à placer sensiblement verticalement dans le faisceau lumineux du projecteur au moins deux cellules photoélectriques allongées (17, 18) ou deux séries (17, 18) de cellules photoélectriques disposées de manière adjacente les unes au-dessus des autres de telle sorte que la partie supérieure de leur face sensible s'étende dans la zone non éclairée par le projecteur et leur partie inférieure dans la zone éclairante du faisceau lumineux du projecteur quelle que soit la position de réglage dans le sens vertical du projecteur, la longueur de chaque cellule photoélectrique allongée ou série de cellules photoélectriques étant au moins égale au produit de l'amplitude du déplacement angulaire maximum du projecteur dans le sens vertical par la distance projecteur-cellule, et à comparer les signaux électrique fournis par lesdites cellules photoélectriques (17, 18) et dus à l'éclairage de leur partie inférieure.

3. Procédé selon la revendication 2, caractérisé par le fait que lesdites cellules photoélectriques (17, 18) sont placées dans des positions telles que, dans la position de réglage latéral correct du projecteur, elles s'étendent de part et d'autre de la zone d'éclairage la plus intense (16) du faisceau lumineux émis par le projecteur.

4. Dispositif permettant de faciliter le réglage angulaire dans le sens latéral du faisceau lumineux d'un projecteur (2) de véhicule, dans sa position d'éclairage en code dans laquelle le faisceau lumineux s'étend d'un côté d'une ligne de coupure (13), à l'aide du signal électrique fourni par au moins une cellule photoélectrique placée dans le faisceau lumineux d'un ensemble comprenant une lentille (9) disposée devant le projecteur lumineux (2) et adaptée pour focaliser le faisceau lumineux fourni par ce dernier, des moyens (20) pour comparer les signaux électriques fournis par ladite au moins une cellule photoélectrique et pour fournir des informations relatives à la position latérale du projecteur (2) par rapport à sa position de réglage latéral correct et des moyens de signalisation (24, 25, 26) soumis aux informations fournies par lesdits moyens de comparaison (20) permettant d'indiquer la position latérale du projecteur par rapport à sa position de réglage latéral correct, dispositif caractérisé par le fait qu'il comprend au moins deux cellules photoélectriques allongées (17, 18) ou deux séries (17, 18) de cellules photoélectriques disposées de manière adjacente les unes au-dessus des autres dont les faces sensibles sont sensiblement dans le plan focal (11) de ladite lentille (9) et tournées vers cette dernière, lesdites cellules photoélectriques (17, 18) étant disposées sensiblement verticalement de telle sorte que, quelle que soit la position de réglage dans le sens vertical du projecteur lumineux, la ligne de coupure (13) du faisceau lumineux les coupe de manière que la partie supérieure de leur face sensible s'étende dans la zone non éclairée par le projecteur et leur partie inférieure s'étende dans la zone éclairante du faisceau lumineux du projecteur quelle que soit la position de réglage dans le sens vertical du projecteur (2), la longueur de chaque cellule photoélectrique allongée ou série de cellules photoélectriques étant au moins égale au produit de l'amplitude du déplacement angulaire maximum du projecteur dans le sens vertical par la valeur de la focale de ladite lentille, et que, dans la position de réglage latéral correct du projecteur lumineux, les signaux électriques qu'elles fournissent soient dans un rapport déterminé.

5. Dispositif selon la revendication 4, caractérisé par le fait que lesdites cellules photoélectriques (17, 18) sont placées sensiblement verticalement dans des positions telles que, dans la position de réglage latéral correct du projecteur, elles s'étendent de part et d'autre de la zone d'éclairage la plus intense (16) du faisceau lumineux émis par le projecteur (2).

6. Dispositif selon l'une des revendications 4 et 5, caractérisé par le fait que lesdites cellules photoélectriques (17, 18) sont prévues et disposées de telle sorte que les signaux électriques qu'elles fournissent dans la position de réglage latéral correct du projecteur (2) soient égaux.

7. Dispositif selon l'une quelconque des revendications 4 à 6, caractérisé par le fait que lesdites cellules photoélectriques (30, 31) sont disposées sensiblement verticalement dans des positions telles que, dans la position de réglage latéral correct du projecteur, le sommet ($S_1$) du V de coupure du faisceau lumineux émis par le projecteur soit sur l'une desdites cellules (30).

8. Dispositif selon la revendication 7, caractérisé par le fait qu'il comprend une troisième cellule allongée (32) ou une troisième série (32) de cellules photoélectriques disposées sensiblement verticalement symétriquement par rapport à ladite cellule photoélectrique (30) sur laquelle se situe le sommet de V de coupure du faisceau lumineux du projecteur, cette troisième cellule photoélectrique (32) étant reliée auxdits moyens de comparaison en vue de comparer les courants fournis par cette troisième cellule photoélectrique et ladite cellule photoélectrique centrale (30) et fournir auxdits moyens de signalisation des informations relatives à la position latérale du projecteur par rapport à sa position de réglage latéral correct.

9. Dispositif selon l'une quelconque des revendications 4 à 6, caractérisé par le fait que lesdits moyens de comparaison comprennent un différenciateur (20) pour différencier les signaux électriques fournis par lesdites cellules photoélectriques (17, 18) et fournissant à sa sortie des informations de comparaison de ces signaux, et lesdits moyens de signalisation comprennent un interrupteur électronique (23) qui est soumis aux informations de sortie du différenciateur (20) et dont les trois sorties sont respectivement reliées à trois voyants lumineux (24, 25, 26) de telle sorte qu'à l'une des positions dudit interrupteur électronique (23) est associée la position de réglage latéral correct du projecteur tandis qu'aux deux autres positions dudit interrupteur électronique (23) sont associées les positions de réglage incorrect du projecteur, respectivement d'un côté et de l'autre, par rapport à sa position de réglage latéral correct.

**Claims**

1. Method permitting the facilitation of the angular adjustment, in the lateral direction, of the light beam of a vehicle headlight (2), in its dipped position, in which the light beam extends on one side of a cut-off line, by means of the electrical signal supplied by at least one photoelectric cell placed in the light beam, and in which the position of the headlight is adjusted laterally in order that the electrical signal supplied by the said cell should be at a specified value, characterized in that it consists in placing substantially vertically in the light beam of the headlight the said at least one elongate photoelectric cell (18) of a series (18) of photoelectric cells disposed in an adjacent manner, one above the other, in such a manner that the upper part of its sensitive surface extends in the zone not illuminated by the headlight and its lower part in the illuminating zone of the light beam of the headlight, regardless of what may be the position of adjustment, in the vertical direction, of the headlight, the length of the elongate photoelectric cell or series of photoelectric cells being at least equal to the product of the maximum amplitude of the angular displacement of the headlight in the vertical direction and the headlight-cell distance, and in such a manner that, when the headlight (2) is at its position of correct lateral adjustment, the electrical signal supplied by the said photoelectric cell (18) and due to the illumination of its lower part is at a specified value, preferably at its maximum value.

2. Method permitting the facilitation of the angular adjustment, in the lateral direction, of the light beam of a vehicle headlight (2), in its dipped position, in which the light beam extends on one side of a cut-off line, by means of the electrical signal supplied by at least one photoelectric cell placed in the light beam, and in which the position of the headlight is adjusted laterally in order that the electrical signal supplied by the said at least one photoelectric cell should be at a specified value, characterized in that it consists in placing substantially vertically in the light beam of the headlight at least two elongate photoelectric cells (17, 18) or two series (17, 18) of photoelectric cells disposed in an adjacent manner, one above the other, in such a manner that the upper part of their sensitive surface extends in the zone not illuminated by the headlight and their lower part in the illuminating zone of the light beam of the headlight, regardless of what may be the position of adjustment, in the vertical direction, of the headlight, the length of each elongate photoelectric cell or series of photoelectric cells being at least equal to the product of the maximum amplitude of the angular displacement of the headlight in the vertical direction and the headlight-cell distance, and in comparing the electrical signals supplied by the said photoelectric cells (17, 18) and due to the illumination of their lower part.

3. Method according to Claim 2, characterized in that the said photoelectric cells (17, 18) are placed in positions such that, in the position of correct lateral adjustment of the headlight, they extend on both sides of the zone of most intense illumination (16) of the light beam emitted by the headlight.

4. Device permitting the facilitation of the angular adjustment, in the lateral direction, of the light beam of a vehicle headlight (2), in its dipped position, in which the light beam extends on one side of a cut-off line (13), by means of the electrical signal supplied by at least one photoelectric cell placed in the light beam of a unit comprising a lens (9) disposed in front of the headlight (2) and adapted to focus the light beam supplied by the latter, means (20) for comparing the electrical signals supplied by the said at least one photoelectric cell and for supplying information relating to the lateral position of the headlight (2) in relation to its position of correct lateral adjustment and indicating means (24, 25, 26) which are dependent upon the information supplied by the said comparing means (20) which permit indication of the lateral position of the headlight in relation to its position of correct lateral adjustment, which device is characterized in that it comprises at least two elongate photoelectric cells (17, 18) or two series (17, 18) of photoelectric cells disposed in an adjacent manner, one above the other, the sensitive surfaces of which are substantially in the focal plane (11) of the said lens (9) and turned towards the latter, the said photoelectric cells (17, 18) being disposed substantially vertically in such a manner that, regardless of what may be the position of adjustment, in the vertical direction, of the headlight, the cut-off line (13) of the light beam cuts across them in such a manner that the upper part of their sensitive surface extends in the zone not illuminated by the headlight and their lower part extends in the illuminating zone of the light beam of the headlight, regardless of what may be the position of adjustment, in the vertical direction, of the headlight (2), the length of each elongate photoelectric cell or series of photoelectric cells being at least equal to the product of the maximum amplitude of the angular displacement of the headlight in the vertical direction and the value of the focal length of the said lens, and that, in the position of correct lateral adjustment of the headlight, the electric signals which they supply are in a specified ratio.

5. Device according to Claim 4, characterized in that the said photoelectric cells (17, 18) are placed substantially vertically in positions such that, in the position of correct lateral adjustment of the headlight, they extend on both sides of the zone of most intense illumination (16) of the light beam emitted by the headlight (2).

6. Device according to one of Claims 4 and 5, characterized in that the said photoelectric cells (17, 18) are provided and disposed in such a manner that the electrical signals which they supply in the position of correct lateral adjustment of the headlight (2) are equal.

7. Device according to any one of Claims 4 to 6, characterized in that the said photoelectric cells (30, 31) are disposed substantially vertically in positions such that, in the position of correct lateral adjustment of the headlight, the apex ($S_1$) of the V of cut-off of the light beam emitted by the headlight is on one of the said cells (30).

8. Device according to Claim 7, characterized in that it includes a third elongate cell (32) or a third series (32) of photoelectric cells disposed substantially vertically, symmetrically in relation to the said photoelectric cell (30) on which the apex of the V of cut-off of the light beam of the headlight is situated, this third photoelectric cell (32) being connected to the said comparing means with a view to comparing the currents supplied by this third photoelectric cell and the said central photoelectric cell (30) and supplying to the said indicating means information relating to the lateral position of the headlight in relation to its position of correct lateral adjustment.

9. Device according to any one of Claims 4 to 6, characterized in that the said comparing means include a differentiator (20) to differentiate the electrical signals supplied by the said photoelectric cells (17, 18) and supplying at its output information concerning the comparison of these signals, and the said indicating means include an electronic interrupter (23) which is dependent upon the output information from the differentiator (20) and the three outputs of which are respectively connected to three warning lights (24, 25, 26) in such a manner that with one of the positions of the said electronic interrupter (23) there is associated the position of correct lateral adjustment of the headlight, while with the other two positions of the said electronic interrupter (23) there are associated the positions of incorrect adjustment of the headlight, on one side and the other respectively, in relation to its position of correct lateral adjustment.

**Patentansprüche**

1. Verfahren zur Vereinfachung der Winkeleinstellung des Lichtkegels eines Fahrzeugscheinwerfers (2) mit eingeschaltetem Abblendlicht in seitlicher Richtung, dessen Lichtbündel auf einer Seite einer Grenzlinie liegt, mit Hilfe eines von wenigstens einer in dem Lichtkegel angeordneten Fotozelle gelieferten elektrischen Signales und bei dem die Scheinwerfereinstellung seitlich verstellt wird, bis das von der Zelle gelieferte elektrische Signal einen festgelegten Wert aufweist, dadurch gekennzeichnet, daß in dem Lichtkegel des Scheinwerfers die wenigstens eine längliche Fotozelle (18) oder eine Reihe (18) von unmittelbar übereinander befindlichen Fotozellen im wesentlich senkrecht derart angeordnet werden, daß der obere Bereich ihrer Meßfläche sich in der nicht von dem Scheinwerfer ausgeleuchteten Zone und deren unterer Bereich sich in der von dem Lichtkegel des Scheinwerfers ausgeleuchteten Zone befindet, und zwar unabhängig von der Scheinwerfereinstellung in vertikalen Richtung, wobei die Längserstreckung der länglichen Fotozelle oder der Reihe von Fotozellen wenigstens gleich dem Produkt aus der Amplitude der maximalen Winkelverstellung des Scheinwerfers in vertikaler Richtung mal dem Scheinwerfer-Zelle-Abstand ist, und derart, daß das von der Fotozelle (18) gelieferte und durch die Beleuchtung ihres unteren Bereichs bedingte elektrische Signal einen festgelegten Wert annimmt, vorzugsweise seinen Maximalwert, wenn sich der Lichtscheinwerfer (2) in der Stellung mit richtiger seitlicher Ausrichtung befindet.

2. Verfahren zur Vereinfachung der Winkeleinstellung des Lichtkegels eines Fahrzeugscheinwerfers (2) mit eingeschaltetem Abblendlicht in seitlicher Richtung, dessen Lichtbündel auf einer Seite einer Grenzlinie liegt, mit Hilfe eines von wenigstens einer in dem Lichtkegel angeordneten Fotozelle gelieferten elektrischen Signales und bei dem die Scheinwerfereinstellung seitlich verstellt wird, bis das von der Zelle gelieferte elektrische Signal einen festgelegten Wert aufweist, dadurch gekennzeichnet, daß in dem Lichtkegel des Scheinwerfers wenigstens zwei längliche Fotozellen (17, 18) oder zwei Reihen (17, 18) von unmittelbar übereinander befindlichen Fotozellen im wesentlich senkrecht derart angeordnet werden, daß der obere Bereich ihrer Meßflächen sich in der nicht von dem Scheinwerfer ausgeleuchteten Zone und deren untere Bereiche sich in der von dem Lichtkegel des Scheinwerfers ausgeleuchteten Zone befinden, und zwar unabhängig von der Scheinwerfereinstellung in vertikaler Richtung, wobei die Längserstreckung jeder länglichen Fotozelle oder jeder Reihe von Fotozellen wenigstens gleich dem Produkt aus der Amplitude der maximalen Winkelverstellung des Scheinwerfers in vertikaler Richtung mal dem Scheinwerfer-Zelle-Abstand ist, und daß die von den Fotozellen (17, 18) gelieferten und durch die Beleuchtung ihrer unteren Bereiche bedingten elektrischen Signale verglichen werden.

3. Verfahren nach Anspruch 2, dadurch gekennzeichnet, daß die Fotozellen (17, 18) derart angeordnet sind, daß sie bei richtiger seitlicher Einstellung des Scheinwerfers zu beiden Seiten der stärker ausgeleuchteten Zone (16) des von dem Scheinwerfer abgestrahlten Lichtkegels liegen.

4. Vorrichtung zur Vereinfachung der Winkeleinstellung des Lichtkegels eines Fahrzeugscheinwerfers (2) mit eingeschaltetem Abblendlicht in seitlicher Richtung, dessen Lichtbündel auf einer Seite einer Grenzlinie (13) liegt, mit Hilfe eines elektrischen Signales, das von wenigstens einer Fotozelle geliefert ist, die in dem Lichtkegel einer Anordnung angeordnet ist, die eine Linse (9), die vor dem Lichtscheinwerfer (2) angeordnet ist und dazu dient, den von dem letzteren gelieferten Lichtkegel zu fokussieren, Mittel (20) zum Vergleichen der von der wenigstens einen Fotozelle gelieferten elektrischen Signale und zum Liefern von Informationen, die sich auf die seitliche Einstellung des Scheinwerfers (2) im Verhältnis zu seiner richtigen seitlichen Einstellung beziehen, sowie Anzeigemittel (24, 25, 26) aufweist, die von den von den vergleichenden Mitteln (20) gelieferten Informationen abhängen und zum Anzeigen der seitlichen Stellung des Scheinwerfers im Verhältnis zu seiner richtigen seitlichen Einstellung dienen, dadurch gekennzeichnet, daß sie wenigstens zwei längliche Fotozellen (17, 18) oder zwei Reihen (17, 18) von unmittelbar übereinander befindlichen Fotozellen aufweist, deren Meßflächen sich im wesentlichen in der Bildebene (11) der Linse (9) befinden und der letzteren zugekehrt sind, wobei die Fotozellen (17, 18) derart im wesentlich senkrecht angeordnet sind, daß unabhängig von der Lichtscheinwerfereinstellung in vertikaler Richtung die Grenzlinie (13) des Lichtkegels sie derart schneidet, daß der obere Bereich ihrer Meßflächen sich in der nicht von dem Scheinwerfer ausgeleuchteten Zone und deren unterer Bereich sich in der von dem Lichtkegel des Scheinwerfers ausgeleuchteten Zone befindet, und zwar unabhängig von der Scheinwerfereinstellung in vertikaler Richtung, wobei die Länge jeder länglichen Fotozelle oder Reihe von Fotozellen wenigstens gleich dem Produkt aus der Amplitude der maximalen Winkelverstellung des Scheinwerfers in vertikaler Richtung mal dem Wert der Brennweite der Linse ist, und derart, daß bei richtiger seitlicher Lichtscheinwerfereinstellung die elektrischen Signale, die diese (Fotozellen) liefern, sich in einer festgelegten Beziehung zueinander befinden.

5. Vorrichtung nach Anspruch 4, dadurch gekennzeichnet, daß die Fotozellen (17, 18) im wesentlichen senkrecht derart angeordnet sind, daß sie sich bei richtiger seitlicher Einstellung des Scheinwerfers zu beiden Seiten der stärker ausgeleuchteten Zone (16) des von dem Scheinwerfer (2) abgestrahlten Lichtkegels befinden.

6. Vorrichtung nach einem der Ansprüche 4 oder 5, dadurch gekennzeichnet, daß die Fotozellen (17, 18) derart ausgelegt und angeordnet sind, daß die elektrischen Signale, die sie bei richtiger seitlicher Einstellung des Scheinwerfers (2) liefern, gleich sind.

7. Vorrichtung nach einem der Ansprüche 4 bis 6, dadurch gekennzeichnet, daß die Fotozellen (30, 31) im wesentlichen senkrecht derart angeordnet sind, daß sich der Scheitelpunkt (S1) der V-förmigen Grenzlinie des von dem Scheinwerfer abgestrahlten Lichtkegels bei richtiger seitlicher Einstellung des Scheinwerfers auf einer der Zellen (30) befindet.

8. Vorrichtung nach Anspruch 7, dadurch gekennzeichnet, daß sie eine dritte längliche Zelle (32) oder eine dritte Reihe (32) von Fotozellen aufweist, die im wesentlichen senkrecht symmetrisch zu der Fotozelle (30) angeordnet sind, auf der sich der Scheitel der V-förmigen Grenzlinie des Scheinwerfer-Lichtkegels befindet, wobei die dritte Fotozelle (32) mit den vergleichenden Mitteln verbunden ist, um die von der dritten Fotozelle und der mittleren Fotozelle gelieferten Ströme zu vergleichen und um an die Anzeigemittel Informationen zu liefern, die sich auf die seitliche Stellung des Scheinwerfers im Verhältnis zu seiner richtigen seitlichen Einstellung beziehen.

9. Vorrichtung nach einem der Ansprüche 4 bis 6, dadurch gekennzeichnet, daß die vergleichenden Mittel einen Differenzverstärker (20) aufweisen, um die Differenz zwischen den von den Fotozellen (17, 18) gelieferten elektrischen Signalen zu bilden und um an seinem Ausgang Vergleichsinformationen über diese Signale zu liefern, und daß die Anzeigemittel einen elektronischen Umschalter (23) aufweisen, der von den Ausgangsinformationen des Differenzverstärkers (20) gesteuert ist und dessen drei Ausgänge derart je mit einer von drei Anzeigelampen (24, 25, 26) verbunden sind, daß eine der Stellungen des elektronischen Umschalters (23) der richtigen Einstellung des Scheinwerfers in seitlicher Richtung zugeordnet ist, während die beiden anderen Stellungen des elektronsichen Umschalters (23) den falschen Einstellungen des Scheinwerfers zugeordnet sind, und zwar auf der einen bzw. auf der anderen Seite von der richtigen Einstellung in seitlicher Richtung.

FIG.1

FIG.2

FIG.3

FIG.4

EP 0 200 072 B1

FIG.5

FIG.6

FIG.7